# EUROPEAN PATENT APPLICATION

(11) **EP 4 729 903 A1**
(43) Date of publication of application: **22.04.2026**
(21) Application number: 23942016.9
(22) Date of filing: 03.07.2023
(51) Int. Cl.: G01K 1/14, G01K 1/00, G01K 7/02

(54) **TEMPERATURE MEASURING SYSTEM WITHOUT DAMAGING LADLE STRUCTURE**

(30) Priority: 19.06.2023 CN 202310731048
(71) Applicant: Rhi Magnesita (Dalian) Co., Ltd, Dalian, Liaoning 116600 (CN)
(72) Inventor: FENG, Hebin, Dalian, Liaoning 116600 (CN)
(74) Representative: Cabinet Chaillot
(86) International application number: PCT/CN2023/105498
(87) International publication number: WO 2024/259748

(57) **Abstract**

The present invention provides a temperature measuring system without damage to a ladle structure, including a ladle and temperature measuring members. The ladle includes a steel shell, a refractory layer arranged on an inner side of the steel shell, and a permanent layer arranged between the steel shell and the refractory layer. An outer surface of the steel shell is provided with exhaust holes which extend to an outer surface of the permanent layer. The cross-section of the temperature measuring members is less than that of the exhaust holes such that the temperature measuring members can extend into the exhaust holes for temperature measurement. Outer sides of the temperature measuring members are provided with protruding portions which abut against walls of the exhaust holes to fix the temperature measuring members in the exhaust holes. Gaps are formed between non-protruding portions on the outer sides of the temperature measuring members and the walls of the exhaust holes to discharge gas. The temperature measuring members are mounted in the exhaust holes of the steel shell, thus avoiding damage to the ladle structure. After installation of the temperature measuring members, the protruding portions abut against the walls of the exhaust holes to thereby fix the temperature measuring members in the exhaust holes, the gaps are formed between the non-protruding portions on the outer sides of the temperature measuring members and the walls of the exhaust holes for gas discharge, and the gas pressure in the ladle is high, such that gas in the ladle is smoothly discharged from the gaps under the action of a force applied by the gas pressure.

## Description

### FIELD

The invention relates to the technical field of ladles, in particular to a temperature measuring structure without damage to a ladle structure.

### BACKGROUND

A ladle, as a vessel used for receiving and pouring molten steel, is sequentially provided with a steel shell, a permanent layer, and a refractory layer from outside to inside. The steel shell is provided with exhaust holes that extend to the outer wall of the permanent layer. When the ladle contains high-temperature molten steel, the high-temperature molten steel is in contact with the refractory layer, resulting in damage to the refractory layer. If the refractory layer is burned through by the high-temperature molten steel, serious accidents such as leaking of the molten steel may occur. In order to timely find the damage of the refractory layer, the temperature of the refractory layer is monitored in the prior art, that is, thermocouples are inserted into the ladle to monitor the temperature in the ladle; if the monitored temperature is higher than a risk threshold, it indicates that the refractory layer has been damaged and needs to be repaired and replaced. Because the exhaust holes in the steel shell are used for discharging gas and cannot be blocked, the thermocouples are not allowed be installed in the exhaust holes in the prior art, and an additional hole needs to be drilled in the steel shell for installation of the thermocouples, which will cause damage to the ladle structure.

### SUMMARY

The technical issue to be settled by the invention is to provide a temperature measuring system without damage to a ladle structure.

In order to solve the above-mentioned technical problem, the present invention provides a temperature measuring system without damage to a ladle structure, comprising a ladle and temperature measuring members, the ladle comprising a steel shell, a refractory layer arranged on an inner side of the steel shell and a permanent layer arranged between the steel shell and the refractory layer, an outer surface of the steel shell defining exhaust holes which extend to an outer surface of the permanent layer, characterized in that a cross-section of the temperature measuring members is less than that of the exhaust holes such that the temperature measuring members are capable of extending into the exhaust holes for temperature measurement; outer sides of the temperature measuring members are provided with protruding portions which abut against walls of the exhaust holes to thereby fix the temperature measuring members in the exhaust holes, and gaps are formed between non-protruding portions on the outer sides of the temperature measuring members and the walls of the exhaust holes for discharging gas.

Furthermore, outer walls of the temperature measuring members are sleeved with polygonal nuts, corners of the polygonal nuts act as the protruding portions, and edges of the polygonal nuts act as the non-protruding portions.

Furthermore, the temperature measuring members extend through the exhaust holes to reach the outer surface of the permanent layer.

Furthermore, the temperature measuring members are thermocouples.

Furthermore, the temperature measuring system comprises a temperature measuring box, wherein a temperature acquisition module is arranged in the temperature measuring box, and the temperature measuring members are electrically connected to the temperature acquisition module in the temperature measuring box.

Furthermore, a wireless communication device is arranged in the temperature acquisition module and has a wireless communication function.

Furthermore, the number of the exhaust holes is more than one.

Furthermore, a side surface of the steel shell serves as a lying surface, the steel shell can lie down with the lying surface facing downwards to perform ladle baking, and side surfaces, not serving as the lying surface, of the steel shell are provided with the exhaust holes.

Furthermore, the top of the steel shell forms a slag discharge port, and an area, less than 800 mm below the slag discharge port, on the outer wall of the steel shell is a hazardous slag-splashing area. The exhaust holes are formed in portions, outside the hazardous slag-splashing area, on the side surfaces not serving as the lying surface.

Furthermore, a left cross-beam and a right cross-beam are arranged on the outer surface of the steel shell, an area below the left cross-beam and the right cross-beam is a half-embedded area. The exhaust holes are formed in portions, outside the half-embedded area, on the side surfaces not serving as the lying surface.

Compared with the prior art where holes are drilled in the steel shell to mount temperature measuring members, temperature measuring members are mounted in the exhaust holes of the steel shell in the present invention, thus avoiding damage to the ladle structure. To guarantee gas discharge of the exhaust holes, the protruding portions are arranged on the outer sides of the temperature measuring members. After installation of the temperature measuring members, the protruding portions abut against the walls of the exhaust holes to fix the temperature measuring members in the exhaust holes, the gaps are formed between the non-protruding portions on the outer sides of the temperature measuring members and the walls of the exhaust holes to discharge gas. The gas pressure in the ladle is high, such that gas in the ladle can be smoothly discharged from the gaps under the action of a force applied by the gas pressure, thus guaranteeing smooth gas discharge. In addition, the temperature measuring members are fixed in the exhaust holes by means of the protruding portions, such that the temperature measuring members are prevented from radial deflection, thus avoiding disturbance to gas discharge.

### BRIEF DESCRIPTION OF THE DRAWINGS

FIG. 1 is a schematic diagram of a temperature measuring system without damage to a ladle structure.
FIG. 2 is a longitudinal sectional view of a side wall of a ladle.
FIG. 3 is a schematic diagram of a hexagon nut and an exhaust hole.

Reference signs: 1, ladle; 10, steel shell; 11, upper cross-beam; 12, lower cross-beam; 13, left cross-beam; 14, right cross-beam; 15, exhaust hole; 161, slag discharge port; 162, cavity; 17, hook; 18, permanent layer; 19, refractory layer; 2, temperature measuring box; 3, thermocouple; 4, hexagon nut; 51, protruding portion; 52, non-protruding portion; 6, gap.

### DESCRIPTION OF THE EMBODIMENTS

The invention is described in further detail below in conjunction with specific embodiments.

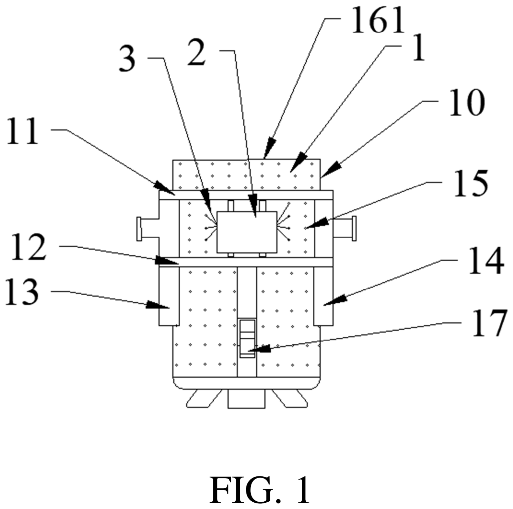

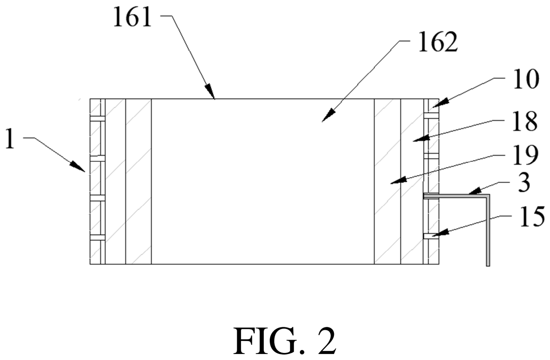

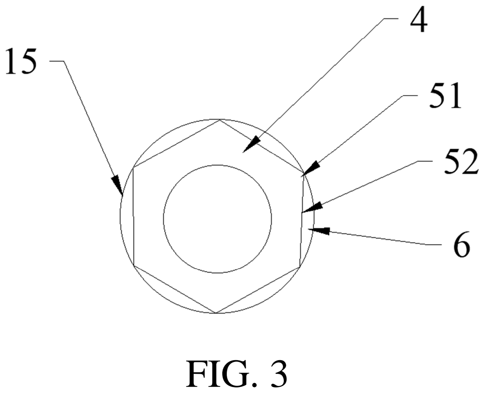

Referring to FIG. 1, a ladle 1 includes a steel shell 10. Referring to FIG. 2, a refractory layer 19 is arranged on an inner side of the steel shell 10, a permanent layer 18 is arranged between the steel shell 10 and the refractory layer 19, and a cavity 162 is delimited and surrounded by the refractory layer 19. An outer surface of the steel shell 10 defines a plurality of exhaust holes 15, and the exhaust holes 15 extend from the outer surface of the steel shell 10 to an outer surface of the permanent layer 18 for discharging gas in the ladle 1. Referring to FIG. 1, a temperature measuring box 2 made from a thermal-insulation material is mounted on the outer wall of the steel shell 10, and a temperature acquisition module is arranged in the temperature measuring box 2. Thermocouples 3 are arranged on an outer side of the temperature measuring box 2, and the thermocouples 3 are electrically connected to the temperature acquisition module arranged in the temperature measuring box 2 and configured to transmit temperature data of the ladle to the temperature acquisition module. A wireless communication device is arranged in the temperature acquisition module and configured to upload the received temperature data of the ladle 1 to a host computer. Outer walls of the thermocouples 3 are sleeved with hexagon nuts 4. Referring to FIG. 3, the hexagon nuts 4 are hexagonal, six corners of each hexagon nut 4 form protruding portions 51, and six edges of each hexagon nut 4 are non-protruding portions 52. The cross-section of the thermocouples 3 is less than that of the exhaust holes 15. The thermocouples 3 extend through the exhaust holes 15 to reach the outer surface of the permanent layer 18 for temperature measurement. The protruding portions 51 of the hexagon nuts 4 abut against walls of the exhaust holes 15 to thereby fix the thermocouples 3 in the exhaust holes 15, and gaps 6 are formed between the non-protruding portions 52 of the hexagon nuts 4 and the walls of the exhaust holes 15. The gas pressure in the ladle 1 is high, and gas in the ladle 1 is smoothly discharged from the gaps 6 under the action of a force applied by the gas pressure. The temperature measuring system provided by the invention consists of the ladle 1, the temperature measuring box 2, the temperature acquisition module, the thermocouples 3, and the hexagon nut 4 arranged on the thermocouples 3.

Referring to FIG. 1, an upper cross-beam 11, a lower cross-beam 12, a left cross-beam 13 and a right cross-beam 14 are arranged on the outer wall of the steel shell 10. FIG. 1 illustrates the outer surface of the rear side of the steel shell 10 on which a hook 17 is arranged. The steel shell 10 has a front side not shown. Since the ladle 1 needs to lie down to be baked by a baking device in the ladle baking process, one side surface of the ladle 1 needs to be used as a lying surface. In this embodiment, the side surface of the steel shell 10 in the front side is used as the lying surface of the ladle 1, and the steel ladle 10 lies down with the front surface of the steel shell 10 facing downwards. Therefore, during temperature measurement, the thermocouples 3 should extend into the exhaust holes in other side surfaces of the steel shell 10, preferably extend into the exhaust holes 15 in a rear surface of the steel shell 10 rather than extending into the exhaust holes 15 in the front surface of the steel shell 10. A slag discharge port 161 is formed in the top of the steel shell 10. Since steel slag easily splashes into an area of less than 800 mm below the slag discharge port 161, on the outer wall of the steel shell 1 (this area is called a hazardous slag-splashing area) when poured out from the cavity 162 via the slag discharge port 161, the thermocouples 3 should extend into the exhaust holes 15 beyond the hazardous slag-splashing area rather than extending into the exhaust holes 15 in the hazardous slag-splashing area. Before the smelting process, the ladle 1 is generally half-embedded in a mud pit on a transport vehicle to be transported to a smelting place, an area, below the left cross-beam 13 and the right cross-beam 14, of the outer wall of the steel shell 10 is a half-embedded area, and the thermocouples 3 should extend into the exhaust holes 15 outside the half-embedded area rather than extending into the exhaust holes 15 in the half-embedded area.

The embodiments of the invention are described above, but the protection scope of the invention is not limited to the above embodiments. Any non-substantive transformations or substitutions made by those skilled in the art based on the concept of the invention should fall within the protection scope of the invention.

## Claims

1. A temperature measuring system without damage to a ladle structure, comprising a ladle (1) and temperature measuring members (3), the ladle (1) comprising a steel shell (10), a refractory layer (19) arranged on an inner side of the steel shell (10) and a permanent layer (18) arranged between the steel shell (10) and the refractory layer (19), an outer surface of the steel shell (10) defining exhaust holes (15) which extend to an outer surface of the permanent layer (18), **characterized in that** a cross-section of the temperature measuring members (3) is less than that of the exhaust holes (15) such that the temperature measuring members (3) are capable of extending into the exhaust holes (15) for temperature measurement; outer sides of the temperature measuring members (3) are provided with protruding portions (51) which abut against walls of the exhaust holes (15) to thereby fix the temperature measuring members (3) in the exhaust holes (15), and gaps (6) are formed between non-protruding portions (52) on the outer sides of the temperature measuring members (3) and the walls of the exhaust holes (15) for discharging gas.

2. The temperature measuring system according to claim 1, **characterized in that** outer walls of the temperature measuring members (3) are sleeved with polygonal nuts (4), corners of the polygonal nuts (4) act as the protruding portions (51), and edges of the polygonal nuts (4) act as the non-protruding portions (52).

3. The temperature measuring system according to claim 1, **characterized in that** the temperature measuring members (3) extend through the exhaust holes (15) to reach the outer surface of the permanent layer (18).

4. The temperature measuring system according to claim 1, **characterized in that** the temperature measuring members (3) are thermocouples.

5. The temperature measuring system according to claim 1, **characterized by** comprising a temperature measuring box (2), wherein a temperature acquisition module is arranged in the temperature measuring box (2), and the temperature measuring members (3) are electrically connected to the temperature acquisition module in the temperature measuring box (2).

6. The temperature measuring system according to claim 5, **characterized in that** a wireless communication device is arranged in the temperature acquisition module and has a wireless communication function.

7. The temperature measuring system according to claim 1, **characterized in that** the number of the exhaust holes (15) is more than one.

8. The temperature measuring system according to claim 1, **characterized in that** a side surface of the steel shell (10) serves as a lying surface, the steel shell (10) can lie down with the lying surface facing downwards to perform ladle baking, and side surfaces, not serving as the lying surface, of the steel shell (10) are provided with the exhaust holes (15).

9. The temperature measuring system according to claim 8, **characterized in that** a slag discharge port (161) is formed in a top of the steel shell (10), and an area, less than 800 mm below the slag discharge port (161), on the outer wall of the steel shell (10) is a hazardous slag-splashing area, and the exhaust holes (15) are formed in portions, outside the hazardous slag-splashing area, of the side surfaces not serving as the lying surface.

10. The temperature measuring system according to claim 8, **characterized in that** a left cross-beam (13) and a right cross-beam (14) are arranged on the outer surface of the steel shell (10), an area below the left cross-beam (13) and the right cross-beam (14) is a half-embedded area, and the exhaust holes (15) are formed in portions, outside the half-embedded area, of the side surfaces not serving as the lying surface.
